# EUROPEAN PATENT SPECIFICATION

(11) **EP 1 811 739 B1**
(45) Date of publication and mention of the grant of the patent: **29.08.2012**
(21) Application number: 06027053.5
(22) Date of filing: 29.12.2006
(51) Int. Cl.: H04W 8/06, H04L 29/08

(54) **Home agent apparatus and method of implementing load allocation in communication network**
Heimagentvorrichtung und Verfahren zur Ausführung von Lastzuteilung in einem Kommunikationsnetz
Appareil d'agent domestique et procédé d'intégration d'une allocation de charge dans un réseau de communication

(30) Priority: 29.12.2005 CN 200510112312
(43) Date of publication of application: 25.07.2007
(73) Proprietor: Alcatel Lucent, 75007 Paris (FR)
(72) Inventor: Xuan, Wang, c/o Alcatel Shanghai Bell Co., Ltd., 2001206 SHANGHAI (CN)
(74) Representative: Wetzel, Emmanuelle

(56) References cited:
- WO-A-2004/017172
- US-A1- 2005 047 420
- FAIZAN J ET AL: "Efficient dynamic load balancing for multiple home agents in mobile IPv6 based networks" PERVASIVE SERVICES, 2005. ICPS '05. PROCEEDINGS. INTERNATIONAL CONFERENCE ON SANTORINI, GREECE JULY 11-14, 2005, PISCATAWAY, NJ, USA,IEEE, 11 July 2005 (2005-07-11), pages 178-187, XP010834825 ISBN: 0-7803-9032-6

## Description

### FIELD OF THE INVENTION

The present invention relates to communication network and, more particularly, to a home agent apparatus in a communication network (especially a mobile IP network).

### BACKGROUND OF THE INVENTION

The Publication "Efficient dynamic load balancing for multiple home agents in mobile IPv6 based networks" (J. Faizan et al., Pervasive Services, 2005, ICPS'05 Proceedings, International Conference on Santorini, Greece, July 11-14, 2005, Piscataway, NJ, USA, pages 178-187, ISBN: 0-7803-9032-6) discloses a load balancing mechanism as an extension to Mobile IPv6 that provides a dynamic load balancing among multiple Home Agents. Each Home Agent operates in one of three states, namely Active Home Agent, Backup Home Agent or Inactive Home Agent.

International Publication WO 2004/017172 discloses systems and methods for selecting a Home Agent in a mobile IP network. One exemplary system of this publication includes a first Home Agent configured to receive mobile IP registration request messages associated with mobile nodes in the mobile IP network. The first Home Agent uses system load information to load balance the mobile IP registration request message between the Home Agents. In another embodiment of this publication, a home agent control node (HACN) is responsible of forwarding mobile node requests to a specified Home Agent. If no Home Agent is specified, the HACN may determine a Home Agent based on other factors, such as loads on the available Home Agents that are periodically conveyed to the HACN via heartbeat messages.

Hosts in conventional IP technique communicate with each other by using fixed IP addresses and TCP port numbers. During the communication, their IP addresses and TCP port numbers must remain unchanged, otherwise the communication between them can not continue.

A mobile IP host may need to move over a network during communication, and its IP address might change frequently. In this occasion, if the conventional manner is adopted, then the change in IP address will lead to interruptions of communication. To resolve this problem, the principle of handling cellular mobile phone calls is introduced into mobile IP technique, as a result, a mobile node uses a fixed IP address and keeps a single link layer connection with the IP host in any position by just logging on once, and the communication will proceed continuously. To this end, a mobile agent is introduced into the mobile IP network, which may be a mobile IP server or router and can know where a mobile node is actually connected. Mobile agents are classified into home agents (HA) and foreign agents. Wherein, a home agent is a mobile IP agent on a home network and has at least one interface on the home network. It is responsible for intercepting data packets sent to a mobile node and forwarding these data packets to a care-of node of this mobile node by using tunnel technique when said mobile node leaves from its home network and connects to a certain foreign network. Further, a home agent is responsible for maintaining information on the current position of a mobile node.

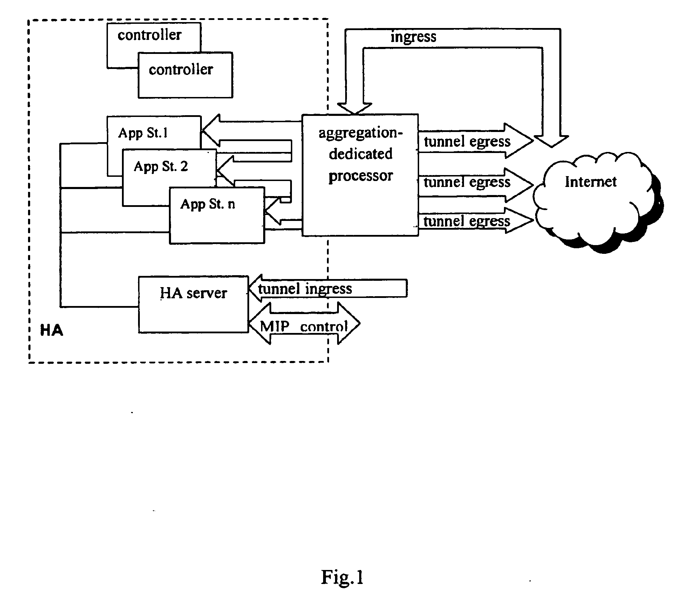

For a mobile device, a home agent functions as a router and masks the mobility of the mobile device from external IP networks together with a PDSN (packet data service node) device, so that all mobile devices belonging to a home agent seem to exist in one sub-network from the perspective of external IP networks. The principle thereof is that a home agent server sets up a connection with a mobile user via IP tunnel protocol, which is a basic method for PDSN and the home agent server to provide the mobile user with mobile data services. Due to the limited processing capability of each processor in the home agent server, there is a need to group mobile devices within the home agent with each group consisting of an independent network processor; and IP packets from the outside are distributed into different groups. A device that is to assume this distribution task must have functions of analyzing IP packets, analyzing routes and forwarding IP packets. However, if this task is assumed by a module within the HA, then such concentrated design is not simple enough and imposes relatively high requirements on the performance of hardware and software apparently, which does not help to reduce device costs or improve reliability etc, just as shown in Fig. 1.

Additionally, STARENT uses a dedicated platform with high design, manufacture and maintenance costs, which does not conform to the development trend of communication platforms. And, the router developed by CISCO lately is not a communication platform designed for 3G mobile communication devices in the field of CDMA 2000 and the like, which is also not suitable for sustained development.

A universal communication computing platform based on architectures like ATCA (Advanced Telecom Computing Architecture) can accomplish the function of load sharing. A high-speed Ethernet is configured in an internal bus thereof. Further, the independent high-speed Ethernet can be extended through RTM, and with the perfect support of network by modern operating system (e.g. enterprise LINUX-CGE), it is the best choice to build a powerful processing platform with multiple processors by using the internal network thereof.

### SUMMARY OF THE INVENTION

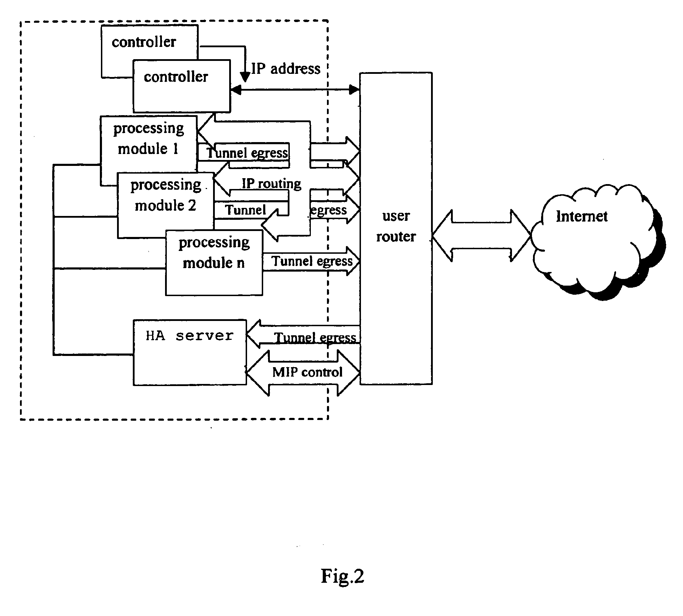

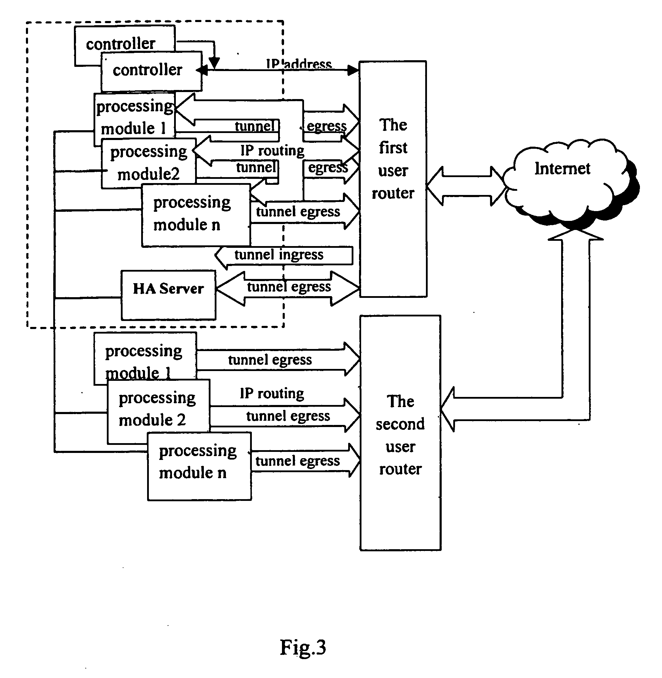

Therefore, an object of the present invention is to provide a solution for resolving the foresaid problems in the prior art, in which load allocation can be implemented by using a user router or user routers. As described previously, a home agent server sets up a connection with a mobile user via IP tunnel protocol. Thus, the procedure of allocating load to different ingress processors is actually a procedure of allocating different tunnels, and, allocating IP addresses here is essentially allocating IP addresses of tunnels. Each ingress processor in the HA is configured as a router (i.e. software having a router function is loaded therein) and notifies a user router of its own route list via route protocol, then load allocation can be performed by using a user router or user routers, i.e. multiple IP tunnels are allocated, just as shown in Fig. 2. However, an adverse effect of doing this is that the number of Ethernet ports of the user router demanded will be increased. Nevertheless, it is the best solution on the premise of enough ports. When the number of ports of a main user router (the first user router) is less than the demand of the HA, a second user router can be configured outside the HA, just as shown in Fig. 3. In a word, this solution is relatively flexible in terms of network configuration.

According to an aspect of the present invention, a method of implementing load allocation in a home agent apparatus of a communication network is provided, which implements load allocation by using a user router. Preferably, the method comprises the steps of: notifying the user router of the route lists of multiple ingress processors that are configured as ingress routers; configuring each ingress processor of said home agent apparatus as an ingress router; allocating load from an external network to multiple ingress processors by using said user router; and processing said load by using multiple ingress processors that are configured as ingress routers.

When the number of ports of said user router is less than the demand of the HA (home agent), the redundant load is allocated to corresponding other multiple ingress processors by using a second user router; and the allocated redundant load is processed by said other multiple ingress processors. Wherein, said other multiple ingress processors are also configured as ingress routers, and said second user router is also notified of the route lists thereof.

According to another aspect of the present invention, a home agent apparatus for optimizing load allocation in a communication network is provided, which implements load allocation by using a user router. Preferably, the home agent apparatus comprises: multiple ingress processors, which are configured as ingress routers for processing load from an external network; a first user router for allocating load to said multiple ingress processors; and a route notifying means for notifying said user router of the route list of each of said ingress routers via route protocol.

Preferably, when the number of ports of said first user router is less than the demand of the HA (home agent), said home agent apparatus further comprises: other multiple ingress processors, which are configured as ingress routers for processing load from the external network; and a second user router for allocating redundant load to said multiple ingress processors for processing.

Compared with the solution of STARENT, this solution uses a universal communication platform, thus, it is advantageous from the perspective of costs for development, maintenance and devices.

Compared with the solution of implementing load allocation using a concentrated processor, this solution costs less and has a shorter development period and better flexibility in terms of configuration.

An adverse effect of the present solution is that the number of network ports of the user router demanded will be increased.

### BRIEF DESCRIPTION ON THE DRAWINGS

Hereinafter, the present invention will be described in detail with reference to the accompanying drawings:
Fig. 1 is a schematic view of a mobile IP network in the prior art;
Fig. 2 is a schematic view of a mobile IP network according to an embodiment of the present invention;
Fig. 3 is a schematic view of the connection between newly added user modules and newly added routers after the routers are added on the user side in order to expand the capacity of HA;
Fig. 4 is a block diagram of a home management apparatus 1 capable of implementing load allocation in a communication network according to an embodiment of the present invention; and
Fig. 5 is a flow chart of the method of implementing load allocation in home management apparatus 1 of the communication network according to an embodiment of the present invention.

In all the above drawings, like reference numerals designate the same or similar components.

### DESCRIPTION OF THE PREFERRED EMBODIMENTS

Hereinafter, embodiments of the present invention will be described in detail with reference to the accompanying drawings. However, it should be understood that the present invention is not limited to the embodiments.

Fig.2 is a schematic view of a mobile IP network according to an embodiment of the present invention. Wherein, a control module (including two controllers) processes users' IP access applications according to the data obtained from an AAA (authentication, authorization and accounting) server and then allocates different users to different processing modules (processing modules 1 ... n) according to the load situation, so that it is different users have different tunnel IP addresses that represents allocating users.

The control module notifies each processing module of the tunnel IP address of a user which the processing module is in charge of, and the processing module notifies a user router via a dynamic routing protocol (e.g. OSPF).

The user routers sends data packets that are to be sent to users into different processing modules based on the tunnel IP addresses in the data packets and implements subsequent mobility processing according to the control of an MIP protocol. During this procedure, IP packets from a network are not opened or processed by the processing modules but delivered directly to the subsequent mobility processing modules.

The processing modules send data packets from users directly to the user router.

Fig. 3 is a schematic view of another embodiment according to the present invention. When the number of ports of the user router (the first user router) as shown in Fig. 2 is less than the demand of the HA, a second user router is configured outside the HA to allocate redundant load to said multiple ingress routers.

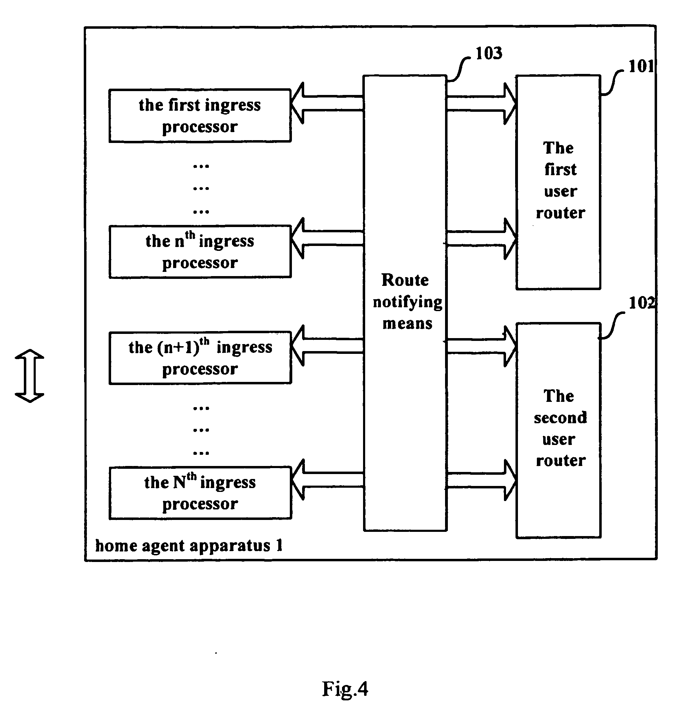

Fig. 4 is a block diagram of a home management apparatus 1 capable of implementing load allocation in a communication network according to an embodiment of the present invention. Wherein, the home management apparatus 1 comprises a first user router 101, a route notifying means 103 and multiple ingress processors (the first ingress processor ... the n^{th} ingress processor).

Each of said multiple ingress processors is configured as an ingress router (i.e. software having a router function is loaded at the ingress processor) to process load from an external network (e.g. the Internet). The route notifying means 103 notifies the first user router 101 of the route lists of said multiple ingress processors and stores the route lists in said first user router 101. Upon receipt of traffic load from the external network, the first user router 101 allocates load to the ingress processors namely the first one to the n^{th} one based on the obtained route lists of said multiple ingress processors.

Since the method above will increase the demand on the number of ports of the user router, when traffic load from the external network is too heavy and the number of ports of the first user router 101 and the ingress processors cannot meet the demand, there is a need to add a second user router 102 and corresponding multiple ingress processors ( the (n+1)^{th} ingress processor ... the N^{th} ingress processor).

Likewise, the route notifying means 103 notifies said second user router 102 of the route lists of the ingress processors namely the (n+1)^{th} one to the N^{th} one that are also configured as ingress routers and then stores the route lists in the second user router 102. The second user router 102 allocates the redundant load that is left over after the allocation performed by the first user router 101 to the ingress processors namely the (n+1)^{th} one to the N^{th} one based on the obtained route lists of the ingress processors namely the (n+1)^{th} one to the N^{th} one.

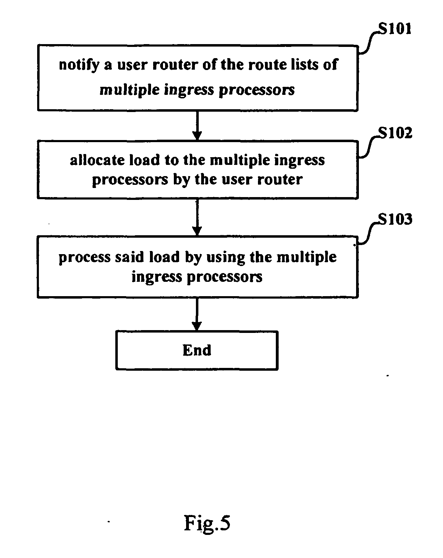

Fig. 5 is a flowchart of the method of implementing load allocation in home management apparatus 1 of a communication network according to an embodiment of the present invention. Hereafter, this method will be described with reference to Fig. 4.

Firstly, in step S101,the first user router 101 is notified of the route lists of multiple ingress processors that are configured as ingress routers (the first ingress processor to the n^{th} ingress processor). Next, in step S102, the first user router 101 allocates load from an external network to the ingress processors namely the first one to the n^{th} one based on the obtained route lists of said multiple ingress processors. Finally, in step S103, the ingress processors namely the first one to the n^{th} one process the allocated traffic load.

Since the method above will increase the demand on the number of ports of the user router, when traffic load from the external network is too heavy and the number of ports of the first user router 101 and the ingress processors cannot meet the demand, there will be a need to add a second user router 102 and corresponding multiple ingress processors.

The same steps are performed for traffic load that is left over after the allocation performed by the first user router. That is, the second user router 102 is notified of the route lists of the ingress processors namely the (n+1)^{th} one to the N^{th} one that are also configured as ingress routers, and the route lists are stored in the second user router 102. Then, the second user router 102 allocates redundant load that is left over after the allocation performed by the first user router 101 to the ingress processors namely the (n+1)^{th} one to the N^{th} one based on the obtained route lists of the ingress processors namely the (n+1)^{th} one to the N^{th} one. Afterward, said ingress processors namely the (n+1)^{th} one to the N^{th} one process the allocated traffic load.

The home agent apparatus and method for implementing load allocation according to the present invention is preferably applied to an ATCA(Advanced Telecom Computing Architecture)-based high-speed Ethernet.

As the embodiments of the present invention have been described, the present invention is not limited to particular systems, devices and protocols, and various modifications or alternations may be made by those skilled in the art within the scope as defined in the appended claims.

## Claims

1. A method of implementing load allocation in a home agent apparatus of a communication network,
**characterized by**:
- implementing load allocation by using a user router comprised by said home agent apparatus;
- wherein the user router is notified (S101) of the route lists of multiple ingress processors that are configured as ingress routers,
- wherein said user router (101) allocates load (S102) from an external network to said multiple ingress processors of said home agent apparatus, and
- wherein the allocated load is processed (S103) by said multiple ingress processors.

2. The method according to claim 1, **characterized by** further comprising the steps of:
when the number of ports of said user router is less than the demand of the home agent, allocating redundant load to corresponding other multiple ingress processors by using a second user router (102); and
processing the allocated redundant load by said other multiple ingress processors.

3. The method according to any one of claims 1 to 2,
**characterized in that**, said communication network is a mobile IP network.

4. A home agent apparatus for optimizing load allocation in a mobile IP network,
**characterized in that**:
- said home agent apparatus comprises multiple ingress processors which are configured as ingress routers for processing load from an external network;
- said home agent apparatus comprises a route notifying means (103) for notifying a user router of the route lists of said multiple ingress processors that are configured as ingress routers, and
- said home agent apparatus further comprises said user router (101) adapted to allocate load (S102) from said external network to said multiple ingress processors of said home agent apparatus.

5. The home agent apparatus according to claim 4,
**characterized by** further comprising:
other multiple ingress processors, which are configured as ingress routers, for processing load from an external network; and
a second user router (102) for allocating redundant load to corresponding other ingress processors when the number of ports of said first user router is less than the demand of the home agent.

6. The home agent apparatus according to claim 5,
**characterized in that**, said communication network is a mobile IP network.

## Patentansprüche

1. Verfahren zur Ausführung von Lastzuteilung in einer Heimagentvorrichtung eines Kommunikationsnetzwerks,
**gekennzeichnet durch**:
- Ausführen der Lastzuteilung unter Verwendung eines in der besagten Heimagentvorrichtung umfassten Benutzer-Routers;
- wobei dem Router die Routinglisten von Mehrfacheingangs-Prozessoren, die als Eingangs-Router konfiguriert sind, gemeldet werden (S101),
- wobei der besagte Benutzer-Router (101) seine Last (S102) von einem externen Netzwerk an die besagten Mehrfacheingangs-Prozessoren der besagten Heimagentvorrichtung zuteilt, und
- wobei die zugeteilte Last **durch** die besagten Mehrfacheingangs-Prozessoren verarbeitet wird (S103).

2. Verfahren nach Anspruch 1, **dadurch gekennzeichnet, dass** es weiterhin die folgenden Schritte umfasst:
Wenn die Anzahl der Ports des besagten Benutzer-Routers niedriger als der Bedarf des Heimagenten ist, Zuteilen der redundanten Last an entsprechende weitere Mehrfacheingangs-Prozessoren unter Verwendung eines zweiten Benutzer-Routers (102); und
Verarbeiten der zugeteilten redundanten Last durch die besagten weiteren Mehrfacheingangs-Prozessoren.

3. Verfahren nach einem beliebigen der Ansprüche 1 bis 2, **dadurch gekennzeichnet, dass** das besagte Kommunikationsnetzwerk ein mobiles IP-Netzwerk ist.

4. Heimagentvorrichtung zur Optimierung der Lastzuteilung in einem mobilen IP-Netzwerk,
**dadurch gekennzeichnet, dass**:
- die besagte Helmagentvorrichtung Mehrfacheingangs-Prozessoren umfasst, weiche als Eingangs-Router zum Verarbeiten der Last von einem externen Netzwerk konfiguriert sind;
- die besagte Heimagentvorrichtung ein Routenmeldungsmittel (103) zum Melden der Routinglisten der besagten Mehrfacheingangs-Prozessoren, welche als Eingangs-Router konfiguriert sind, an einen Benutzer-Router umfasst, and
- die besagte Heimagentvorrichtung weiterhin den besagten Benutzer-Router (101) umfasst, welcher für das Zuteilen von Last (S102) von dem besagten externen Netzwerk an die besagten Mehrfacheingangs-Prozessoren der besagten Helmagentvorrichtung ausgelegt ist.

5. Helmagentvorrichtung nach Anspruch 4,
**dadurch gekennzeichnet, dass** sie weiterhin umfasst:
weitere Mehrfacheingangs-Prozessoren, die als Eingangs-Router konfiguriert sind, zum Verarbeiten der Last von einem externen Netzwerk; und
einen zweiten Benutzer-Router (102) zum Zutellen von redundanter Last an entsprechende weitere Eingangs-Prozessoren, wenn die Anzahl der Ports des besagten ersten Benutzer-Routers niedriger als der Bedarf des Heimagenten ist.

6. Heimagentvorrichtung nach Anspruch 5,
**dadurch gekennzeichnet, dass** das besagte Kommunikationsnetzwerk ein mobiles IP-Netzwerk Ist.

## Revendications

1. Procédé de mise en oeuvre d'une allocation de charge dans un appareil d'agent domestique d'un réseau de communication,
**caractérisé par**;
- la mise en oeuvre d'une allocation de charge en utilisant un routeur utilisateur indus dans ledit appareil d'agent domestique ;
- dans lequel le routeur utilisateur est averti (S101) des listes de voies d'acheminement de processeurs d'entrée multiples qui sont configurés comme des routeurs d'entrée,
- dans lequel ledit routeur utilisateur (101) alloue une charge (S102) à partir d'un réseau externe vers lesdits processeurs d'entrée multiples dudit appareil d'agent domestique, et
- dans lequel la charge allouée est traitée (S103) par lesdits processeurs d'entrée multiples.

2. Procédé selon la revendication 1, **caractérisé en ce qu'**il comprend en outre les étapes suivantes :
lorsque le nombre de ports dudit routeur utilisateur est inférieur à la demande de l'agent domestique, allouer une charge redondante à d'autres processeurs d'entrée multiples correspondants en utilisant un deuxième routeur utilisateur (102) ; et
traiter la charge redondante allouée au moyen desdits autres processeurs d'entrée multiples.

3. Procédé selon l'une quelconque des revendications 1 à 2, **caractérisé en ce que** ledit réseau de communication est un réseau mobile IP.

4. Appareil d'agent domestique pour optimiser une allocation de charge dans un réseau mobile IP,
**caractérisé en ce que** :
- ledit appareil d'agent domestique comprend des processeurs d'entrée multiples qui sont configurés comme des routeurs d'entrée pour traiter une charge à partir d'un réseau externe ;
- ledit appareil d'agent domestique comprend un moyen de notification de voies d'acheminement (103) pour avertir un routeur utilisateur des listes de voies d'acheminement desdits processeurs d'entrée multiples qui sont configurés comme des routeurs d'entrée, et
- ledit appareil d'agent domestique comprend en outre ledit routeur utilisateur (101) adapté pour allouer une charge (S102) à partir dudit réseau externe vers lesdits processeurs d'entrée multiples dudit appareil d'agent domestique.

5. Appareil d'agent domestique selon la revendication 4,
**caractérisé en ce qu'**il comprend en outre :
d'autres processeurs d'entrée multiples, qui sont configurés comme des routeurs d'entrée, pour traiter une charge à partir d'un réseau externe ; et
un deuxième routeur utilisateur (102) pour allouer une charge redondante à d'autres processeurs d'entrée correspondants lorsque le nombre de ports dudit premier routeur utilisateur est inférieur à la demande de l'agent domestique.

6. Appareil d'agent domestique selon la revendication 5,
**caractérisé en ce que** ledit réseau de communication est un réseau mobile IP.
